# EUROPEAN PATENT SPECIFICATION

(11) **EP 0 481 389 B1**
(45) Date of publication and mention of the grant of the patent: **20.12.1995**
(21) Application number: 91117456.3
(22) Date of filing: 14.10.1991
(51) Int. Cl.: H04N 1/32

(54) **Facsimile apparatus**
Faksimilegerät
Dispositif de fac-similé

(30) Priority: 18.10.1990 JP 280960/90
(43) Date of publication of application: 22.04.1992
(73) Proprietor: SHARP KABUSHIKI KAISHA, Osaka 545 (JP)
(72) Inventor: Yatsunami, Kenroh, c/o Sharp Manufacturing France, F-68360 Soultz (FR)
(74) Representative: TER MEER STEINMEISTER & PARTNER GbR

(56) References cited:
- EP-A- 0 195 258
- EP-A- 0 244 869
- EP-A- 0 331 923
- US-A- 4 811 385
- US-A- 4 910 764
- PATENT ABSTRACTS OF JAPAN vol. 9, no. 244 (E-346)30 September 1985 &JP-A-60094575

## Description

### BACKGROUND OF THE INVENTION

### 1. Field of the Invention

The present invention relates to a facsimile apparatus which has an automatic dialing function.

### 2. Description of the Related Arts

As one kind of facsimile apparatuses, there is a facsimile apparatus which has an automatic dialing function i. e. a function to dial a telephone number to an opponent party on a public telephone line through a telephone exchange system and establish the facsimile communication with the opponent party.

Thus, in this kind of facsimile apparatus, it is necessary to judge if the telephone exchange system is generating a DT (dial tone signal) or not, which indicates that the telephone exchange system is in a condition to allow the reception of the dial transmitted from the pertinent facsimile apparatus. Here, this DT is an alternating voltage signal having a predetermined frequency, which may be different from country to country.

Such a kind of facsimile apparatus having the automatic dialing function, is adapted to memorize in advance the characteristic i. e. the specific frequency of the DT utilized in the telephone line network to which the facsimile apparatus is connected, so that the facsimile apparatus can judge the telephone exchange system is in the condition to allow the reception of the dial by checking and comparing the frequency of the received DT with the memorized frequency, to perform the automatic dialing operation.

Accordingly, a DT detecting circuit is employed by this kind of facsimile apparatus in order to enable the automatic dialing operation. When the DT which is added on a DC voltage existing on the telephone line, is inputted to the DT detecting circuit, the DT detecting circuit obtains the DT by eliminating the DC voltage component of the received signal from the telephone line by means of a capacitor for example, and then generates a signal in a rectangular waveform out of the obtained DT by means of an amplifier and a comparator.

Then, a CPU (Central Processor Unit) of the facsimile apparatus checks the frequency of the DT according to the signal in the rectangular waveform outputted from the DT detecting circuit. If the frequency of this checked DT is same as the frequency memorized in advance as the DT of the telephone line, it is assumed that the telephone exchange system is transmitting the DT, which indicates the condition to allow the reception of the dial transmitted from the pertinent facsimile apparatus, and the automatic dialing operation is proceeded to the next routine step.

As described above, it is necessary to make the facsimile apparatus memorize the frequency of the DT of the telephone exchange system to which the facsimile apparatus is to be connected (this memorized frequency is referred as a reference frequency). On the other hand, various frequencies for the DT are utilized in various countries. Thus, in the manufacture of the facsimile apparatus, it is necessary to store in advance into the memory device of the facsimile apparatus, the frequency peculiar to the area or country where the facsimile apparatus is to be furnished, resulting in a serious drawback that an assortment becomes necessary in the manufacture of the facsimile apparatus according to the destination of the facsimile apparatus to be shipped, and the productivity becomes quite low. In addition, in case of a facsimile apparatus to be connected with a private branch exchange (PBX), since even more various kinds of frequencies for the DT are encountered, it is very difficult for the producer to deal with such a variety of frequencies, and further, it is impossible for the producer to set in advance a reference frequency which is unknown to the producer, while the development of the PBX is quite fast nowadays.

### SUMMARY OF THE INVENTION

It is therefore an object of the present invention to provide a facsimile apparatus, which can be simply manufactured without requiring the assortment in manufacture in correspondence with the kind of DT peculiar to the country etc., or the PBX, to which the facsimile apparatus is to be furnished.

According to the present invention, the above mentioned object can be achieved by a first facsimile apparatus having an automatic dialing function. The first facsimile apparatus is provided with: a mode setting device for selectively setting one of a characteristic setting mode and an automatic dialing mode to the facsimile apparatus; a detecting device for detecting the dial tone from a telephone exchange system via a telephone line which dial tone indicates that the telephone exchange system is in a condition to allow the reception of the dial transmitted from the pertinent facsimile apparatus; a characteristic judging device for judging a characteristic of the detected dial tone; and a memory for storing the judged characteristic of the dial tone which is detected by the detecting device when the characteristic setting mode is set by the mode setting device. The first facsimile apparatus is also provided with: a control device for comparing the stored characteristic with the judged characteristic of the dial tone which is detected by the detecting device when the automatic dialing mode is set by the mode setting device, and dialing a telephone number via the telephone line if the stored characteristic is coincident with the judged characteristic of the dial tone detected in the automatic dialing mode; and a data transmitting device for transmitting facsimile data via the telephone line when a dialing operation of the control device is completed.

According to the present invention, the above mentioned object can be also achieved by a second facsimile apparatus having an automatic dialing function. The second facsimile apparatus is provided with: a mode setting device for selectively setting one of a characteristic setting mode and an automatic dialing mode to the facsimile apparatus; a detecting device for detecting a dial tone from a telephone exchange system via a telephone line which dial tone indicates that the telephone exchange system is in a condition to allow the reception of the dial transmitted from the pertinent facsimile apparatus; a characteristic judging device for judging a characteristic of the detected dial tone; and a memory for storing characteristics of more than one different dial tone. The second facsimile apparatus is also provided with: a comparing device for comparing the stored characteristics with the judged characteristic of the dial tone which is detected by the detecting device when the characteristic setting mode is set by the mode setting device, and selecting one of the stored characteristics which is coincident with the judged characteristic of the dial tone detected in the characteristic setting mode; a control device for comparing the selected characteristic with the judged characteristic of the dial tone which is detected by the detecting device when the automatic dialing mode is set by the mode setting device, and dialing a telephone number via the telephone line if the selected characteristic is coincident with the judged characteristic of the dial tone detected in the automatic dialing mode; and a data transmitting device for transmitting facsimile data via the telephone line when a dialing operation of the control device is completed.

In the first facsimile apparatus, after the first facsimile apparatus is furnished to the actual place i.e. connected to the telephone line at the actual place, the characteristic setting mode is set by use of the mode setting device. Then, when the dial tone is inputted to the first facsimile apparatus from the telephone exchange system via the telephone line, the detecting device detects the dial tone. Then, the characteristic judging device judges the characteristic of the dial tone according to the detection result of the detecting device. Then, the memory stores the characteristic judged by the characteristic judging device.

At this condition, the automatic dialing mode is set by use of the mode setting device. When the dial tone is inputted to the first facsimile apparatus via the telephone line, the detecting device detects the dial tone, and the characteristic judging device judges the characteristic of the detected dial tone. Then, the control device compares the characteristic stored in the memory with this judged characteristic of the dial tone detected in the automatic dialing mode, and, if these two characteristics are coincident with each other, the control device judges that the telephone exchange system is now in a condition for receiving the dial, so that the control device dials a telephone number via the telephone line so as to perform the automatic dialing operation.

As described above, the first facsimile apparatus can be available for any kind of characteristic of the dial tone since the characteristic of the dial tone is set after the first facsimile apparatus is furnished to the actual place, bringing a great advantage that the characteristic of the dial tone is not necessary to be stored in advance in the stage of manufacture, and that the assortment in the manufacture is not necessary.

In the second facsimile apparatus of the present invention, various kinds of characteristics of the dial tones are stored into the memory in advance in the stage of manufacture. For example, the characteristics of the dial tones utilized in all the countries to which the facsimile apparatus is possibly to be shipped, are stored in the stage of manufacture. Then, after the second facsimile apparatus is connected to the telephone line at the actual place, the characteristic setting mode is set by use of the characteristic setting device. Then, when the dial tone is inputted to the second facsimile apparatus, the dial tone is detected by the detecting device, and the characteristic judging device judges the characteristic of the detected dial tone. Then, the comparing device compares the characteristics stored in advance in the memory with this judged characteristic of the detected dial tone, and selects one of these stored characteristics which is coincident with this judged characteristic of the detected dial tone.

At this condition, the automatic dialing mode is set by use of the mode setting device. When the dial tone is inputted to the second facsimile apparatus via the telephone line, the detecting device detects the dial tone, and the characteristic of the detected dial tone is judged by the characteristic judging device. Then, the control device compares the characteristic selected by the comparing device with this judged characteristic of the dial tone detected in the automatic dialing mode, and, if these characteristics are coincident with each other, the control device judges that the telephone exchange system is now in a condition for receiving the dial, so that the control device dials a telephone number via the telephone line so as to perform the automatic dialing operation.

As described above, the second facsimile apparatus can be available for various kinds of characteristics of the dial tones since the characteristic of the dial tone is selected out of the various kinds of characteristics of the dial tones stored in advance, after the second facsimile apparatus is furnished to the actual place, bringing a great advantage that the assortment in the manufacture is not necessary.

In the second facsimile apparatus of the present invention, the memory may be preferably adapted to store the judged characteristic of the dial tone detected in the characteristic setting mode, into a predetermined area thereof as the selected characteristic, if none of the stored characteristics is coincident with this judged characteristic of the dial tone detected in the characteristic setting mode, according to a comparison result of the comparing device. Accordingly, in this case, even if all of the characteristics stored in advance in the memory are turned out to be not enough to cover the characteristic of the DT at the actual place, the appropriate characteristic to enable the automatic dialing function can be still set in the facsimile apparatus.

Further objects and advantages of the present invention will be apparent from the following description of the preferred embodiment of the invention as illustrated in the accompanying drawings.

### BRIEF DESCRIPTION OF THE DRAWINGS

Fig. 1 is a block diagram showing an electrical construction of main portion of a facsimile apparatus as a first embodiment of the present invention;
Fig. 2 is a circuit diagram showing a DT detecting circuit in the facsimile apparatus of Fig. 1;
Fig. 3, which consist of Figs. 3A to 3C, are charts showing wave forms at different portions in the DT detecting circuit of Fig. 2;
Fig. 4 is another block diagram showing an electrical construction of main portion of a facsimile apparatus as a second embodiment of the present invention; and
Fig. 5, which consist of Figs. 5A and 5B, are schematic views showing the storing condition of a memory in the facsimile apparatus of Fig. 4.

### DETAILED DESCRIPTION OF THE PREFERRED EMBODIMENT

A preferred embodiment of the present invention will be described below with reference to the accompanying drawings.

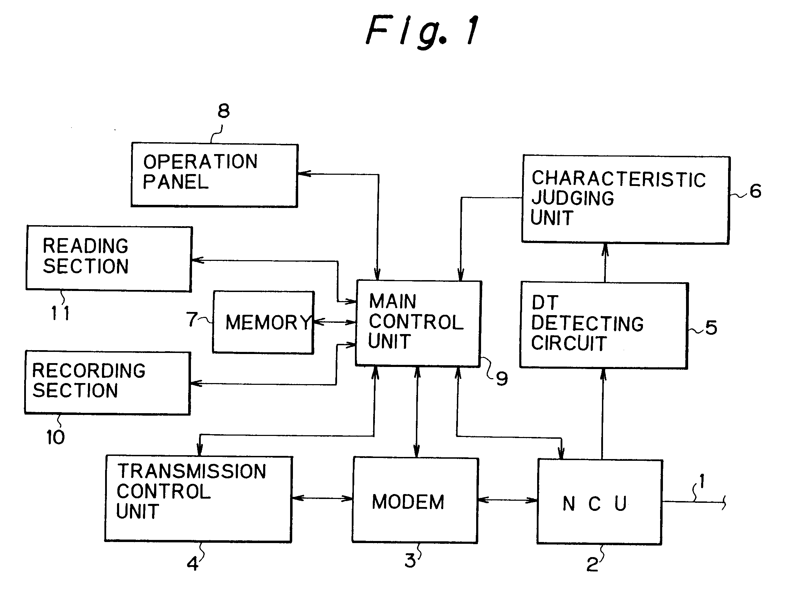

In Fig. 1, a facsimile apparatus as the first embodiment is connected to a telephone line 1.

The facsimile apparatus is provided with a NCU (Network Control Unit) 2 which serves as an interface device with the telephone line 1, a modem 3 which performs the modulation and demodulation of the facsimile data signals, a transmission control unit 4 which controls the transmission of the facsimile data signal, and a DT detecting circuit 5 which detects the DT from the telephone line 1.

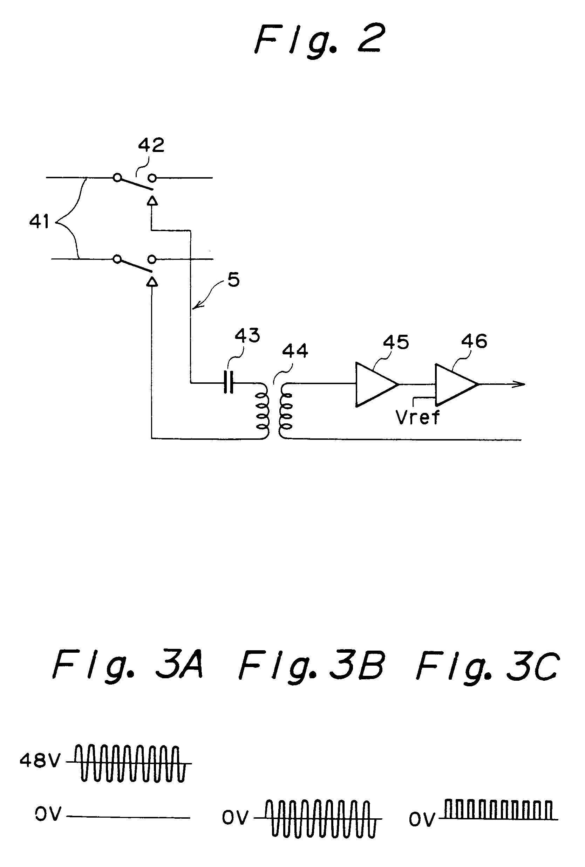

The construction and the operation of the DT detecting circuit 5 is explained here with referring to Figs. 2 and 3.

In Fig. 2, the DT detecting circuit 5 is provided with a switch 42 connected to the input line 41, which is connected to the telephone line 1 via the NCU 2 of Fig. 1, a capacitor 43 which is connected to the output of the switch 42, a transformer 44 which is connected to the capacitor 43, an amplifier 45 which is connected to the output side of the transformer 44, and a comparator 46 which is connected at one input terminal thereof to the output of the amplifier 45. The other input terminal of the comparator 46 is connected to a predetermined reference voltage Vref.

In Fig. 3, suppose that the DT, which is an alternating voltage signal with a frequency of 450 Hz for example, and which is added onto the direct voltage DC 48 V existing on the input line 41 i. e. the telephone line as shown in Fig. 3A, for example, is inputted to this DT detecting circuit 5. The capacitor 43 shuts the DC 48 V, so that the alternating component of 450 Hz as shown in Fig. 3B is obtained at the transformer 44. Then, this only alternating component is inputted to the amplifier 45 via the transformer 44, and is amplified. Finally, only the signal component having a level more than a predetermined level based on the voltage Vref, is outputted from the comparator 46, so that a rectangular wave signal of 450 Hz is obtained as shown in Fig. 3C, which can be identified as the DT in the facsimile apparatus.

In Fig. 1, the facsimile apparatus is also provided with a characteristic judging unit 6 which judges the characteristic i. e. the frequency of the DT according to the detection result of the DT detecting circuit 5, a memory 7 which stores the characteristic of the DT judged by the characteristic judging unit 6 etc., an operation panel 8, and a main control unit 9 which controls the overall operations of the facsimile apparatus.

The facsimile apparatus is further provided with a recording section 10 which is adapted to record onto a recording sheet for example, the facsimile data transmitted to the facsimile apparatus from the opponent party via the telephone line 1, and a reading section 11 which is adapted to read an image of an original set to an image reading position of the facsimile apparatus and output facsimile data to be transmitted to the opponent party via the telephone line 1.

The operation panel 8 includes a plurality of keys, by which commands necessary for the operation of the facsimile apparatus can be inputted, and also includes a display section which displays a message and an image necessary for the operation. The operation panel 8 is especially adapted such that one of an automatic dialing mode, a manual dialing mode and a characteristic setting mode can be selected by use of the operation panel 8. The main control unit 9 is adapted to control on the basis of the mode selected by the operation panel 8.

If the manual dialing mode is selected, the facsimile operation can be performed by the operator manually in the same manner as the conventional facsimile apparatus, i. e. by hearing and checking the dial tone, inputting the dial number via the keys, sending the facsimile data and so on.

The operation and construction of the present embodiment will be explained hereinbelow in detail as for the automatic dialing mode and the characteristic setting mode. In the facsimile apparatus of the present embodiment, the reference frequency is set in the facsimile apparatus after the facsimile apparatus is furnished to the actual place, that is to say, the reference frequency is not set in advance in the manufacturing process as in the case of the aforementioned related art apparatus.

Namely, after connecting the facsimile apparatus to the telephone line 1 at the actual place, the characteristic setting mode is set by use of the operation panel 8. Then, when the predetermined DT, which is peculiar to this actual place, is transmitted from the telephone exchange system into the facsimile apparatus via the telephone line 1, this DT is inputted to the DT detecting circuit 5 through the NCU 2, where the DT is converted to the rectangular wave signal as mentioned before (Fig. 3). Then, the characteristic judging unit 6 judges the characteristic i. e. the frequency Fc of the DT on the basis of this rectangular wave signal, and gives the value of the frequency Fc to the main control unit 9. The main control unit 9 stores this value of the frequency Fc into the memory 7 as the reference frequency.

Next, the automatic dialing mode is set by use of the operation panel 8. Then, when the DT is inputted to the facsimile apparatus via the telephone line 1 in this automatic dialing mode, the characteristic judging unit 6 judges and gives the frequency Fc of the DT to the main control unit 9 in the same manner as mentioned above. Then, the main control unit 9 compares this given frequency Fc with the reference frequency stored in the memory 7. If these compared frequencies are coincident with each other, the main control unit 9 judges that the telephone exchange system is now in a condition for receiving the dial. Then, the transmission of the dial, which is inputted by the operator via the ten key switch of the operation panel 8 or memorized in the memory 7 in advance etc., as the next routine procedure of the automatic dialing mode, is executed by the main control unit 9, so as to complete the automatic dialing operation.

As explained above, according to the first embodiment, the DT, which is actually utilized at the actual place, is judged after the facsimile apparatus is furnished thereto, and thus judged frequency is stored into the memory 7 as the reference frequency, so that this reference frequency can be compared with the received DT in the later actual use of the facsimile apparatus. Consequently, there is no need to store the DT peculiar to each of the various countries or PBXs, at the stage of manufacture as in the aforementioned related art apparatus, with a great benefit that the assortment in the manufacture is not necessary with respect to the destination of the product.

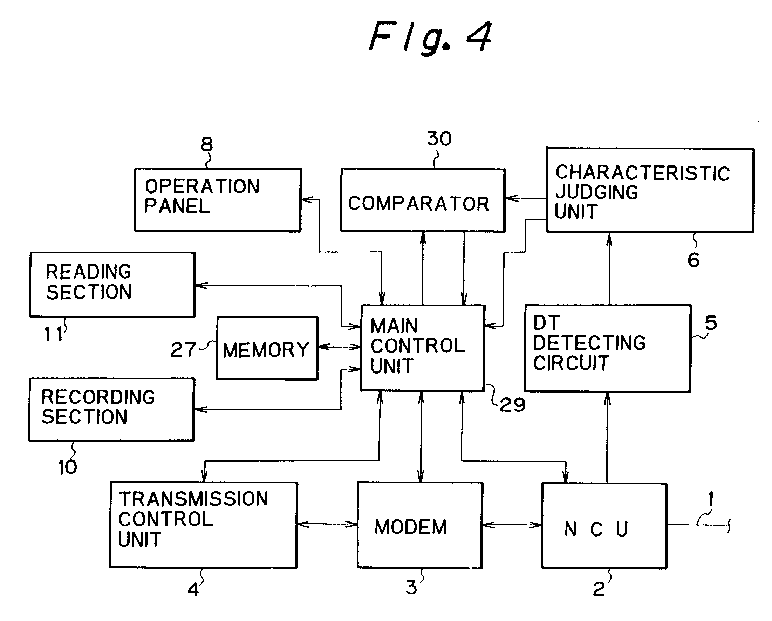

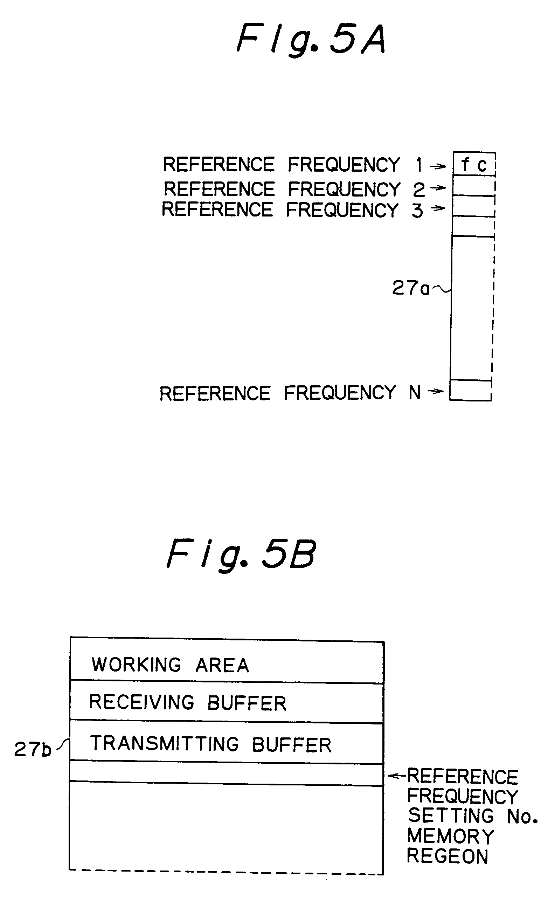

The second embodiment of the present invention will be explained hereinbelow with referring to Figs. 4 and 5.

In Fig. 4, the same elements as those in Fig. 1 carry the same reference numerals and the explanations thereof are omitted. The different elements shown in Fig. 4 from those in Fig. 1, are a memory 27, a main control unit 29 and a comparator 30. Otherwise, the elements shown in Fig. 4 are same as those in Fig. 1.

The memory 27 includes a fixed memory device such as a ROM (Read Only Memory) for storing in advance various kinds of reference frequencies of the DTs in known various countries or PBXs which may be a possible destination of shipment of the pertinent facsimile apparatus, in the stage of manufacture. Fig. 5A shows this storing condition of the memory 27. As shown in Fig. 5A, the reference frequencies 1, 2,..., N are stored in a portion 27a of the memory 27 of Fig. 4.

In Fig. 4, the comparator 30 is adapted to compare the frequency outputted from the characteristic judging unit 6 with the various reference frequencies stored in the memory 27.

In the second embodiment, the operation of setting the valid reference frequency is performed at the actual place after the facsimile apparatus is furnished thereto, in the similar manner as the first embodiment. Namely, after connecting the facsimile apparatus to the telephone line 1 at the actual place, the characteristic setting mode is set by use of the operation panel 8. Then, when the predetermined DT peculiar to the actual place is transmitted from the telephone exchange system to the facsimile apparatus via the telephone line 1, the DT is detected by the DT detecting circuit 5, and the frequency of the detected DT is obtained by the characteristic judging unit 6. The frequency obtained at the characteristic judging unit 6 is then inputted to the comparator 30. The comparator 30, which has received this frequency, informs the main control unit 29 of this reception of the frequency. Then, under the control of the main control unit 29, the comparator 30 reads out sequentially the reference frequencies stored in the memory 27, and compares it one after another with the frequency obtained by the characteristic judging unit 6, so as to find out one of the stored reference frequencies which is coincident with the frequency obtained by the characteristic judging unit 6, if any exists.

If one of the reference frequencies stored in the memory 27 is found to be coincident, the comparator 30 informs it to the main control unit 29. Then, the main control unit 29 stores the number (No. ) of this coincident reference frequency to a reference frequency setting No. memory region in a portion 27b of the memory 27 as shown in Fig. 5B. In Fig. 5B, there are also shown a working area, a receiving buffer, and a transmitting buffer provided in the portion 27b of the memory 27.

If none of the reference frequencies stored in the memory 27, is found to be coincident with the frequency obtained by the characteristic judging unit 6, this frequency obtained by the characteristic judging unit 6 is newly stored into the memory 27 at its predetermined specific area, as the reference frequency N, and at the same time, the number N of this newly stored reference frequency is stored into the reference frequency setting No. memory region.

Then, the automatic dialing mode is set by use of the operation panel 8. When, the DT is inputted from the telephone line 1 in this automatic dialing mode, the characteristic judging unit 6 judges and gives the frequency of the inputted DT to the main control unit 29. The main control unit 29 compares this given frequency of the DT with the valid reference frequency, which is stored in the memory 27 at the position corresponding to the reference frequency setting No., which is stored in the reference frequency setting No. memory region. If these compared frequencies are coincident with each other, the main control unit 9 judges that the telephone exchange system is now in a condition for receiving the dial. Then, the transmission of the dial, which is inputted by the operator via the ten key switch of the operation panel 8 or memorized in the memory 27 in advance etc., as the next routine procedure of the automatic dialing mode, is executed by the main control unit 9, so as to complete the automatic dialing operation.

As explained above, according to the second embodiment, various frequencies of DTs utilized in various countries, are stored in the memory 27 in advance at the stage of the manufacture. Then, the DT, which is actually utilized at the actual place, is judged after the facsimile apparatus is furnished thereto i. e. connected to the telephone line 1 there. Then, thus judged frequency is compared with the various reference frequencies stored in the memory 27. If there exists a coincident reference frequency, the coincident frequency is set as the valid reference frequency for this actual place, while if there does not exist a coincident reference frequency, the judged frequency is newly set as the valid reference frequency for this actual place, so that this valid reference frequency is used for the comparison with the received DT in the later actual use of the facsimile apparatus. Consequently, there is no need to store the DT peculiar to each of the various countries or PBXs, at the stage of manufacture as in the aforementioned related art apparatus, with a great benefit that the assortment in the manufacture is not necessary with respect to the destination of shipment.

Many widely different embodiments of the present invention may be constricted without departing from the scope of the present invention. It should be understood that the present invention is not limited to the specific embodiments described in this specification, except as defined in the appended claims.

## Claims

1. A facsimile apparatus having an automatic dialing function, characterized in that said facsimile apparatus comprises:
a mode setting means (8) for selectively setting one of a characteristic setting mode and an automatic dialing mode to said facsimile apparatus;
a detecting means (5) for detecting the dial tone from a telephone exchange system via a telephone line which dial tone indicates that the telephone exchange system is in a condition to allow the reception of the dial transmitted from the pertinent facsimile apparatus;
a characteristic judging means (6) for judging a characteristic of said detected dial tone;
a memory (7) for storing said judged characteristic of the dial tone which is detected by said detecting means when said characteristic setting mode is set by said mode setting means;
a control means (9) for comparing said stored characteristic with said judged characteristic of the dial tone which is detected by said detecting means when said automatic dialing mode is set by said mode setting means, and dialing a telephone number via said telephone line if said stored characteristic is coincident with said judged characteristic of said dial tone detected in said automatic dialing mode; and
a data transmitting means (2, 3, 4) for transmitting facsimile data via said telephone line when a dialing operation of said control means is completed.

2. A facsimile apparatus according to Claim 1, characterized in that said characteristic comprises a frequency of said dial tone, and said characteristic judging means (6) is adapted to judge said frequency.

3. A facsimile apparatus according to Claim 1 or 2, characterized in that said facsimile apparatus further comprises a data receiving means (2, 3, 4, 10) for receiving and recording facsimile data transmitted to said facsimile apparatus via said telephone line.

4. A facsimile apparatus according to any one of Claims 1 to 3, characterized in that said facsimile apparatus further comprises an operation panel (8), by which an operation command and a telephone number can be inputted, and which is provided with a mode setting switch comprising said mode setting means.

5. A facsimile apparatus having an automatic dialing function, characterized in that said facsimile apparatus comprises:
a mode setting means (8) for selectively setting one of a characteristic setting mode and an automatic dialing mode to said facsimile apparatus;
a detecting means (5) for detecting a dial tone from a telephone exchange system via a telephone line which dial tone indicates that the telephone exchange system is in a condition to allow the reception of the dial transmitted from the pertinent facsimile apparatus;
a characteristic judging means (6) for judging a characteristic of said detected dial tone;
a memory (27) for storing characteristics of more than one different dial tone;
a comparing means (30) for comparing said stored characteristics with said judged characteristic of the dial tone which is detected by said detecting means when said characteristic setting mode is set by said mode setting means, and selecting one of said stored characteristics which is coincident with said judged characteristic of said dial tone detected in said characteristic setting mode;
a control means (29) for comparing said selected characteristic with said judged characteristic of the dial tone which is detected by said detecting means when said automatic dialing mode is set by said mode setting means, and dialing a telephone number via said telephone line if said selected characteristic is coincident with said judged characteristic of said dial tone detected in said automatic dialing mode; and
a data transmitting means (2, 3, 4) for transmitting facsimile data via said telephone line when a dialing operation of said control means is completed.

6. A facsimile apparatus according to Claim 5, characterized in that said memory (27) is adapted to store said judged characteristic of said dial tone detected in said characteristic setting mode, into a predetermined area thereof as said selected characteristic, if none of said stored characteristics is coincident with said judged characteristic of said dial tone detected in said characteristic setting mode, according to a comparison result of said comparing means.

7. A facsimile apparatus according to Claim 5 or 6, characterized in that said memory (27) includes a memory region which stores a memory position of said selected characteristic in said memory.

8. A facsimile apparatus according to any one of Claims 5 to 7, characterized in that said facsimile apparatus further comprises a data receiving means (2, 3, 4, 10) for receiving and recording facsimile data transmitted to said facsimile apparatus via said telephone line.

9. A facsimile apparatus according to any one of Claims 5 to 8, characterized in that said characteristic comprises a frequency of said dial tone, and said characteristic judging means (6) is adapted to judge said frequency.

10. A facsimile apparatus according to any one of Claims 5 to 9, characterized in that said facsimile apparatus further comprises an operation panel (8), by which an operation command and a telephone number can be inputted, and which is provided with a mode setting switch comprising said mode setting means.

## Patentansprüche

1. Faksimilegerät mit automatischer Wählfunktion, **dadurch gekennzeichnet, daß** es folgendes aufweist:
- eine Moduseinstelleinrichtung (8) zum wahlfreien Einstellen eines Charakteristikeinstellmodus oder eines automatischen Wählmodus für das Faksimilegerät;
- eine Erkennungseinrichtung (5) zum Erkennen des Wähltons von einem Telefonvermittlungssystem über eine Telefonleitung, wobei der Wählton anzeigt, daß sich das Telefonvermittlungssystem in einem Zustand befindet, in dem es den Empfang eines Wählsignals ermöglicht, das vom betreffenden Faksimilegerät gesendet wird;
- eine Charakteristikbeurteilungseinrichtung (6) zum Beurteilen einer Charakteristik des erfaßten Wähltons;
- einen Speicher (7) zum Abspeichern der beurteilten Charakteristik des Wähltons, wie er von der Erfassungseinrichtung erfaßt wird, wenn der Charakteristikeinstellmodus mittels der Moduseinstelleinrichtung eingestellt ist;
- eine Steuereinrichtung (9) zum Vergleichen der abgespeicherten Charakteristik mit der beurteilten Charakteristik des Wähltons, wie er von der Erfassungseinrichtung erfaßt wird, wenn der automatische Wählmodus durch die Moduseinstelleinrichtung eingestellt wird, und zum Wählen einer Telefonnummer über die Telefonleitung, wenn die abgespeicherte Charakteristik mit der beurteilten Charakteristik des Wähltons, wie im automatischen Wählmodus erfaßt, übereinstimmt; und
- eine Datenübertragungseinrichtung (2, 3, 4) zum Übertragen von Faksimiledaten über die Telefonleitung, wenn ein Wählvorgang durch die Steuereinrichtung abgeschlossen ist.

2. Faksimilegerät nach Anspruch 1, **dadurch gekennzeichnet, daß** die Charakteristik die Frequenz des Wähltons ist und die Charakteristikbeurteilungseinrichtung (6) so ausgebildet ist, daß sie die Frequenz erkennt.

3. Faksimilegerät nach einem der Ansprüche 1 oder 2, **dadurch gekennzeichnet, daß** es ferner eine Datenempfangseinrichtung (2, 3, 4, 10) zum Empfangen und Aufzeichnen von Faksimiledaten aufweist, die über die Telefonleitung an das Faksimilegerät übertragen wurden.

4. Faksimilegerät nach einem der Ansprüche 1 bis 3, **dadurch gekennzeichnet, daß** es ferner eine Bedienkonsole (8) aufweist, durch die ein Bedienbefehl und eine Telefonnummer eingegeben werden können, und die mit einem Moduseinstellschalter als Moduseinstelleinrichtung versehen ist.

5. Faksimilegerät mit automatischer Wählfunktion, **dadurch gekennzeichnet, daß** es folgendes aufweist:
- eine Moduseinstelleinrichtung (8) zum wahlfreien Einstellen eines Charakteristikeinstellmodus oder eines automatischen Wählmodus für das Faksimilegerät;
- eine Erkennungseinrichtung (5) zum Erkennen des Wähltons von einem Telefonvermittlungssystem über eine Telefonleitung, wobei der Wählton anzeigt, daß sich das Telefonvermittlungssystem in einem Zustand befindet, in dem es den Empfang eines Wählsignals ermöglicht, das vom betreffenden Faksimilegerät gesendet wird;
- eine Charakteristikbeurteilungseinrichtung (6) zum Beurteilen einer Charakteristik des erfaßten Wähltons;
- einen Speicher (27) zum Abspeichern von Charakteristiken mehr als eines unterschiedlichen Wähltons;
- eine Vergleichseinrichtung (30) zum Vergleichen der abgespeicherten Charakteristiken mit der beurteilten Charakteristik des durch die Erfassungseinrichtung erfaßten Wähltons, wenn der Charakterisikeinstellmodus durch die Moduseinstelleinrichtung eingestellt ist und zum Auswählen derjenigen abgespeicherten Charakteristik, die mit der beurteilten Charakteristik des im Charakteristikeinstellmodus erfaßten Wähltons übereinstimmt;
- eine Steuereinrichtung (29) zum Vergleichen der ausgewählten Charakteristik mit der beurteilten Charakteristik des Wähltons, wie er von der Erfassungseinrichtung erfaßt wird, wenn der automatische Wählmodus durch die Moduseinstelleinrichtung eingestellt ist, und zum Wählen einer Telefonnummer über die Telefonleitung, wenn die ausgewählte Charakteristik mit der beurteilten Charakteristik des im automatischen Wählmodus erfaßten Wähltons übereinstimmt; und
- eine Datenübertragungseinrichtung (2, 3, 4) zum Übertragen von Faksimiledaten über die Telefonleitung, wenn der Wählvorgang der Steuereinrichtung abgeschlossen ist.

6. Faksimilegerät nach Anspruch 5, **dadurch gekennzeichnet, daß** der Speicher (27) so ausgebildet ist, daß er die beurteilte Charakteristik des im Charakteristikeinstellmodus erfaßten Wähltons in einen vorgegebenen Bereich seiner selbst als ausgewählte Charakteristik einspeichert, wenn keine der abgespeicherten Charakteristiken mit der beurteilten Charakteristik des im Charakteristikeinstellmodus erfaßten Wähltons gemäß dem Vergleichsergebnis der Vergleichseinrichtung übereinstimmt.

7. Faksimilegerät nach einem der Ansprüche 5 oder 6, **dadurch gekennzeichnet, daß** der Speicher (27) einen Speicherbereich beinhaltet, der die Speicherposition der ausgewählten Charakteristik im Speicher einspeichert.

8. Faksimilegerät nach einem der Ansprüche 5 bis 6, **dadurch gekennzeichnet, daß** es ferner eine Datenempfangseinrichtung (2, 3, 4, 10) zum Empfangen und Aufzeichnen von Faksimiledaten aufweist, die über die Telefonleitung an das Faksimilegerät übertragen wurden.

9. Faksimilegerät nach einem der Ansprüche 5 bis 8, **dadurch gekennzeichnet, daß** die Charakteristik die Frequenz des Wähltons ist und die Charakteristikbeurteilungseinrichtung (6) so ausgebildet ist, daß sie die Frequenz erkennt.

10. Faksimilegerät nach einem der Ansprüche 5 bis 9, **dadurch gekennzeichnet, daß** es ferner eine Bedienkonsole (8) aufweist, durch die ein Bedienbefehl und eine Telefonnummer eingegeben werden können, und die mit einem Moduseinstellschalter als Moduseinstelleinrichtung versehen ist.

## Revendications

1. Appareil de télécopie ayant une fonction de composition de numéro automatique, caractérisé en ce que ledit appareil de télécopie comprend :
un moyen de détermination de mode (8) pour déterminer sélectivement l'un d'un mode de détermination de caractéristique et d'un mode de composition de numéro automatique pour ledit appareil de télécopie ;
un moyen de détection (5) pour détecter une tonalité de numérotation provenant d'un système de central téléphonique par l'intermédiaire d'une ligne téléphonique, laquelle tonalité de numérotation indique que le système de central téléphonique est en état de permettre la réception de la numérotation transmise à partir de l'appareil de télécopie considéré ;
un moyen d'évaluation de caractéristique (6) pour évaluer une caractéristique de ladite tonalité de numérotation détectée;
une mémoire (7) pour mémoriser ladite caractéristique évaluée de la tonalité de numérotation qui est détectée par ledit moyen de détection lorsque ledit mode de détermination de caractéristique est déterminé par ledit moyen de détermination de mode ;
un moyen de commande (9) pour comparer ladite caractéristique mémorisée avec ladite caractéristique évaluée de la tonalité de numérotation qui est détectée par ledit moyen de détection quand ledit mode de composition de numéro automatique est déterminé par ledit moyen de détermination de mode, et pour composer un numéro de téléphone par l'intermédiaire de ladite ligne téléphonique, si ladite caractéristique mémorisée coïncide avec ladite caractéristique évaluée de ladite tonalité de numérotation détectée dans ledit mode de composition de numéro automatique; et
un moyen de transmission de données (2, 3, 4) pour transmettre des données de télécopie par l'intermédiaire de ladite ligne téléphonique lorsqu'une opération de composition de numéro dudit moyen de commande est terminée.

2. Appareil de télécopie selon la revendication 1, caractérisé en ce que ladite caractéristique comprend une fréquence de ladite tonalité de numérotation et en ce que ledit moyen (6) d'évaluation de caractéristique (6) est adapté pour évaluer ladite fréquence.

3. Appareil de télécopie selon la revendication 1 ou 2, caractérisé en ce que ledit appareil de télécopie comprend en outre un moyen de réception de données (2, 3, 4, 10) pour recevoir et enregistrer des données de télécopie transmises audit appareil de télécopie par l'intermédiaire de ladite ligne téléphonique.

4. Appareil de télécopie selon l'une quelconque des revendications 1 à 3, caractérisé en ce que ledit appareil de télécopie comprend en outre un panneau de commande (8) grâce auquel un ordre de fonctionnement et un numéro de téléphone peuvent être introduits, et qui est pourvu d'un commutateur de détermination de mode comprenant ledit moyen de détermination de mode.

5. Appareil de télécopie ayant une fonction de composition de numéro automatique, caractérisé en ce que ledit appareil de télécopie comprend :
un moyen de détermination de mode (8) pour déterminer sélectivement l'un d'un mode de détermination de caractéristique et d'un mode de composition de numéro automatique pour ledit appareil de télécopie ;
un moyen de détection (5) pour détecter une tonalité de numérotation provenant d'un système de central téléphonique par l'intermédiaire d'une ligne téléphonique, laquelle tonalité de numérotation indique que le système de central téléphonique est en état de permettre la réception de la numérotation transmise à partir de l'appareil de télécopie considéré ;
un moyen d'évaluation de caractéristique (6) pour évaluer une caractéristique de ladite tonalité de numérotation détectée ;
une mémoire (27) pour mémoriser des caractéristiques de plusieurs tonalités de numérotation différentes ;
un moyen de comparaison (30) pour comparer lesdites caractéristiques mémorisées avec ladite caractéristique évaluée de la tonalité de numérotation est détectée par ledit moyen de détection quand ledit mode de détermination de caractéristique est déterminé par ledit moyen de détermination de mode, et pour sélectionner l'une desdites caractéristiques mémorisées qui coïncide avec ladite caractéristique évaluée de ladite tonalité de numérotation détectée dans ledit mode de détermination de caractéristique;
un moyen de commande (29) pour comparer ladite caractéristique sélectionnée avec ladite caractéristique évaluée de la tonalité de numérotation qui est détectée par ledit moyen de détection quand ledit mode de composition de numéro automatique est déterminé par ledit moyen de détermination de mode, et pour composer un numéro de téléphone par l'intermédiaire de ladite ligne téléphonique, si ladite caractéristique sélectionnée coïncide avec ladite caractéristique évaluée de ladite tonalité de numérotation détectée dans ledit mode de composition de numéro automatique; et
un moyen de transmission de données (2, 3, 4) pour transmettre des données de télécopie par l'intermédiaire de ladite ligne téléphonique lorsqu'une opération de composition de numéro dudit moyen de commande est terminée.

6. Appareil de télécopie selon la revendication 5, caractérisé en ce que ladite mémoire (27) est adaptée pour mémoriser ladite caractéristique évaluée de ladite tonalité de numérotation détectée dans ledit mode de détermination de caractéristique, dans une zone prédéterminée de ladite mémoire, en tant que ladite caractéristique sélectionnée, si aucune desdites caractéristiques mémorisées ne coïncide avec ladite caractéristique évaluée de ladite tonalité de numérotation détectée dans ledit mode de détermination de caractéristique selon un résultat de comparaison dudit moyen de comparaison.

7. Appareil de télécopie selon la revendication 5 ou 6, caractérisé en ce que ladite mémoire (27) comprend une zone de mémoire qui mémorise une position de mémoire de ladite caractéristique sélectionnée dans ladite mémoire.

8. Appareil de télécopie selon l'une quelconque des revendications 5 à 7, caractérisé en ce que ledit appareil de télécopie comprend en outre un moyen de réception de données (2, 3, 4, 10) pour recevoir et enregistrer des données de télécopie transmises audit appareil de télécopie par l'intermédiaire de ladite ligne téléphonique.

9. Appareil de télécopie selon l'une quelconque des revendications 5 à 8, caractérisé en ce que ladite caractéristique comprend une fréquence de ladite tonalité de numérotation, et en ce que ledit moyen d'évaluation de caractéristique (6) est adapté pour évaluer ladite fréquence.

10. Appareil de télécopie selon l'une quelconque des revendications 5 à 9, caractérisé en ce que ledit appareil de télécopie comprend en outre un panneau de commande (8) grâce auquel un ordre de fonctionnement et un numéro de téléphone peuvent être introduits et qui est pourvu d'un commutateur de détermination de mode comprenant ledit moyen de détermination de mode.
